# EUROPEAN PATENT APPLICATION

(11) **EP 1 301 047 A2**
(43) Date of publication of application: **09.04.2003**
(21) Application number: 02022192.5
(22) Date of filing: 04.10.2002
(51) Int. Cl.: H04Q 3/00, H04M 15/00

(54) **Multi-Site IP Buffer Box for PBX Call Accounting**

(30) Priority: 05.10.2001 US 327237 P
(71) Applicant: ALCATEL, 75008 Paris (FR)
(72) Inventor: De Almeida, Joao Eduardo C., Derry, NH 03038 (US); Wengrovitz, Michael, Concord, Massachusetts 01742 (US)
(74) Representative: Dreiss, Fuhlendorf, Steimle & Becker

(57) **Abstract**

A system and method for collecting call detail record (CDR) data in a multi-site enterprise environment and providing call accounting services based on such information. A single multi-site IP buffer box (MIBB) receives CDR data from several private branch exchange (PBX) units over an IP network in real time. The MIBB maintains a table with the IP addresses of each PBX unit from which CDR data may be received. Each IP address is associated with a particular PBX and/or enterprise site. For each CDR ticket received, the MIBB identifies the particular PBX unit transmitting the CDR ticket based on the source address of the transmitting PBX unit. The MIBB then generates a CDR message including the CDR data and information on the particular PBX unit and/or enterprise site to which the CDR data pertains. The MIBB transmits the CDR message to a call accounting processor over a serial or network connection if the call accounting processor is enabled. If the call accounting processor is disabled, the CDR message is stored in a buffer until the processor becomes enabled.

## Description

### CROSS-REFERENCE TO RELATED APPLICATION(S)

This application claims the benefit of U.S. provisional application No. 60/327,237, filed on October 5, 2001, the content of which is incorporated herein by reference.

### FIELD OF THE INVENTION

This invention relates generally to call accounting services, and more particularly, to an efficient system and method for collecting call accounting information in a multi-site enterprise environment.

### BACKGROUND OF THE INVENTION

Enterprises, such as business establishments, hotels, and the like, typically utilize functionality that may be provided by a separate call accounting software package or service provider to correctly apportion telephone charges to individual users or departments of a particular enterprise. Typical call accounting processing includes collecting call detail record (CDR) data associated with each outgoing telephone call, and calculating the cost for each call based on a calling number, called number, time of day, trunk, telephone company tariff rates, and other parameters. A report may be generated based on such call accounting processing and used by the enterprise to track the number and cost of calls made by individuals and departments within each division, to correctly associate call costs to the appropriate cost center or individual.

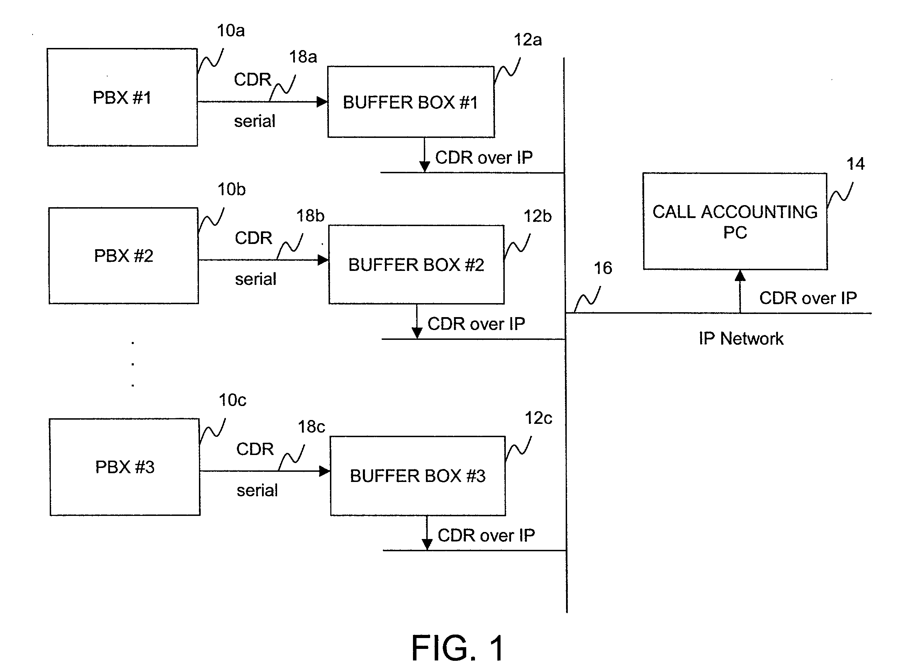

FIG. 1 is a schematic block diagram of a call accounting system that may be typically encountered in the prior art. The system includes one or more private branch exchange (PBX) units 10a-c located at different sites of an enterprise. Each PBX unit is coupled to a data store that is typically referred to as a buffer box 12a-12c, via a serial link 18a-18c such as a RS232 or RS485 link. At the completion of each telephone call, the PBX emits a CDR ticket in real-time to its associated buffer box for storing. A call accounting computer 14 accesses the CDR data over an IP network connection 16 at periodic intervals, and performs various call accounting functions based on the collected data.

In the call accounting system illustrated in FIG. 1, the buffer boxes ensure that CDR tickets are collected in real time, even if the call accounting application in the computer is disabled, has encountered failures, or is unavailable for maintenance. The buffered CDR data may then be provided to the call accounting computer once the call accounting application again becomes functional.

A drawback to the CDR collection architecture illustrated in FIG. 1, however, is that a separate buffer box is needed for each PBX unit at each site of the enterprise for ensuring that the CDR data is collected in real time. Unfortunately, such buffer boxes are often expensive to purchase, and therefore, it is not cost efficient to maintain a separate buffer box for each PBX unit. However, without such a buffer box, CDR data may be lost if not communicated immediately to the call accounting computer. Accordingly, what is needed is a call accounting system for a multi-site enterprise that is cost efficient without compromising CDR data integrity.

### SUMMARY OF THE INVENTION

The present invention is directed to a system and method for collecting call detail record (CDR) data in a multi-site enterprise environment for providing call accounting services. According to one embodiment of the invention, the system includes a plurality of voice switching units, each voice switching unit generating call parameter data associated with the switched call.The system further includes a central data store receiving the call parameter data from the plurality of voice switching units and identifying a particular voice switching unit transmitting a particular call parameter data. The central data store generates a call parameter message including the call parameter data and information associated with the identified voice switching unit. A call accounting processor receives the call parameter message and processes the call parameter data for the identified voice switching unit.

In another embodiment, the invention is directed to a central data store and processing device that includes a network interface receiving a plurality of call parameter data from the plurality of voice switching units. The device further includes a memory storing a list of network addresses and information regarding the voice switching unit associated with each network address. A processor coupled to the network interface and the memory is configured to identify a particular voice switching unit transmitting a particular call parameter data and generate a call parameter message including the call parameter data and information associated with the identified voice switching unit. A second interface transmits the call parameter message to the call accounting processor, and the call accounting processor processes the call accounting data for the identified voice switching unit.

In yet a further embodiment, the invention is directed to a method for providing call accounting services that include receiving a plurality of call parameter data from a plurality of voice switching units, and maintaining a list of network addresses and information on voice switching units associated with each network address. For a particular call parameter data received by the central data store, the central data store identifies a particular voice switching unit transmitting the particular call parameter data, generates a call parameter message including the call parameter data and information associated with the identified voice switching unit, and transmits the call parameter message to a call accounting processor. The call accounting processor then processes the call accounting data for the identified voice switching unit.

A person skilled in the art should appreciate, therefore, that the use of the central data store is more cost efficient and eliminates the need of having a separate buffer box at each site for each PBX unit. For a system involving N PBX units, this results in an approximate cost savings of N:1.

These and other features, aspects and advantages of the present invention will be more fully understood when considered with respect to the following detailed description, appended claims, and accompanying drawings. Of course, the actual scope of the invention is defined by the appended claims.

### BRIEF DESCRIPTION OF THE DRAWINGS

FIG. 1 is a schematic block diagram of a call accounting system that may be typically encountered in the prior art;
FIG. 2A is a schematic block diagram of an improved call accounting system according to one embodiment of the invention;
FIG. 2B is a schematic block diagram of an improved call accounting system according to an alternate embodiment of the invention;
FIG. 3A is a schematic block diagram of a multi-site IP buffer box in the call accounting system of FIG. 2A according to one embodiment of the invention;
FIG. 3B is a schematic block diagram of a multi-site IP buffer box in the call accounting system of FIG. 2B according to one embodiment of the invention; and
FIG. 4 is a flow diagram of a processes carried out by the multi-site IP buffer box of FIGS. 3A and 3B in receiving and transmitting call parameter data according to one embodiment of the invention.

### DETAILED DESCRIPTION OF THE INVENTION

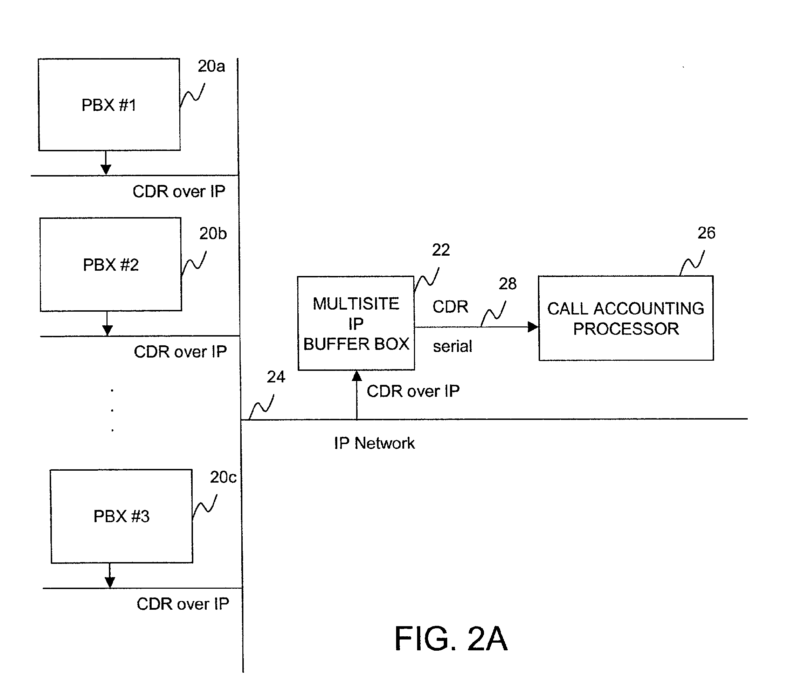

FIG. 2A is a schematic block diagram of an improved call accounting system according to one embodiment of the invention. The improved call accounting system may be advantageously applied to a business enterprise having multiple offices located around the country that may need to monitor and track calls to and from each of its sites.

According to the embodiment illustrated in FIG. 2A, the improved call accounting system includes a plurality of voice switching units in the form of private branch exchange (PBX) units 20a-20c that are coupled to a single multi-site IP buffer box (MIBB) 22 over a data communications network 24 such as, for example, a corporate data network that supports a TCP/IP communications protocol. The MIBB 22 is coupled to a call accounting processor 26 over a serial link 28 such as, for example, an RS232 or RS485 link.

The plurality of PBX units may reside in multiple sites that are not co-located, and the MIBB 22 and call accounting processor 26 may reside, for example, at a corporate headquarter. According to one embodiment of the invention, the call accounting processor 26 includes a call accounting application for analyzing call detail record (CDR) data transmitted by the MIBB. Such CDR data includes, without limitation, a calling number, called number, call duration, telephone trunk, and any other call parameter data associated with an outgoing or incoming call.

In general terms, the MIBB 22 collects and stores CDR data transmitted by the various PBX units 20a-20c over the data communications network 24 in real time or near real time upon the completion of each telephone call. The CDR data is then transmitted to the call accounting processor 26 over the serial link 28 also in real time or near real time, assuming that the call accounting processor 26 is enabled.

If the call accounting processor 26 is disabled, encountering failures, or unavailable for maintenance, the CDR data is buffered in the MIBB 22 until the call accounting processor 26 becomes available again. Once the call accounting processor 26 becomes enabled, the buffered CDR data is transmitted to the call accounting processor 26 for processing. A person skilled in the art should appreciate, therefore, that the use of a single MIBB 22 is more cost efficient and eliminates the need of having a separate buffer box at each site for each PBX unit.

According to one embodiment of the invention, the MIBB 22 may further include an internal processor for processing CDR data according to a processing script prior to transmitting each message to the call accounting processor 26. Such processing may include changing a format of the data transmitted in the CDR ticket. The processing script may vary depending on the call accounting application resident in the call accounting processor 26.

During the processing of the CDR data, the data may be re-arranged, certain portions of the data excluded, margins justified, and/or portions of the data truncated as dictated by the processing script. For example, if the call accounting processor expects the calling number to be left-justified within a 15-character first field, and the call duration to be right-justified within a 10-character second field, while the PBX emits call accounting data with a call duration which is right-justified within a 20 character first field and a calling number which is right-justified within a 12 character second field, the processing script would be configured to swap the two fields, alter the justification and appropriately shorten the two field widths in order to match the message format required by the call accounting processor 26.

According to one embodiment of the invention, the call accounting processor 26 performs call accounting functions based on the CDR data received from the MIBB 22. Typical call accounting processing includes calculating the cost of a call based on a calling number, called number, time of day, trunk, telephone company tariff rates, and other parameters. The call accounting processor may generate a report based on information gathered via such call accounting processing for use by the enterprise to track the number and cost of calls made by individuals and departments within each division, and correctly apportion call costs to the appropriate cost center or individual. According to one embodiment of the invention, the reports are generated automatically based on a predetermined schedule. According to another embodiment of the invention, the reports are generated in response to specific user requests.

Call accounting processing may also detect inappropriate usage of the PBX units 20a-20c such as, for example, expensive off-hour calls, or trunk-to-trunk calling, and may provide alerts to a call manager via e-mail, paging and/or other methods of communication, of such inappropriate calls. Additional functionality may also include trunk analysis to optimize usage of trunks shared by different users within the enterprise.

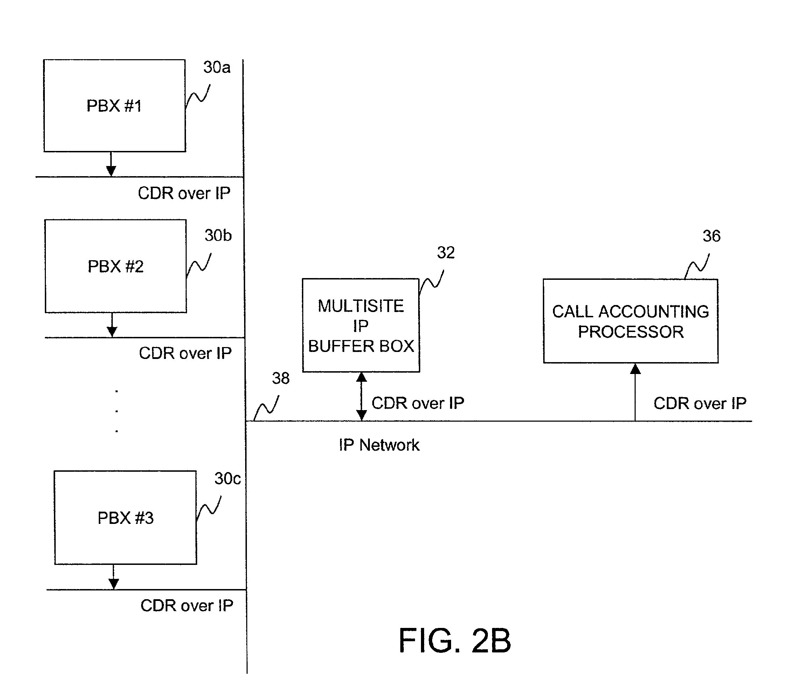

FIG. 2B is a schematic block diagram of an improved call accounting system according to an alternate embodiment of the invention. As in the embodiment illustrated in FIG. 2A, the call accounting system illustrated in FIG. 2B includes a single MIBB 32 that receives CDR data from a plurality of PBX units 30a-30c upon the completion of telephone calls processed by the PBX units. Each PBX unit 30a-30c transmits its CDR data to the MIBB 32 over an IP network 38. The MIBB 32 then transmits the data to a call accounting processor 36. Unlike in the embodiment illustrated in FIG. 2, the MIBB 32 transmits the CDR data to the call accounting processor 36 via the IP network 38 instead of a serial link.

An IP communications protocol such as TCP/IP, FTP, or the like may be used to transmit the CDR data to the call accounting processor 36 over the IP network 38. The selection of an appropriate IP communications protocol may depend, for instance, on how quickly the CDR data needs to be made available to the call accounting processor 36 after its acquisition. A real time acquisition of CDR collection data may be important in enterprises such as hotels, where a guest may check-out immediately after a phone call is completed, and the bill issued to the guest must represent a most current telephone usage. Real time collection of CDR data may also be important for rendering alarms with respect to toll fraud or emergency "911" calls.

If real time collection of CDR data is desired, the call accounting system may implement a TCP/IP communications protocol that allows a continuous TCP/IP socket to be maintained between the MIBB 32 and the call accounting processor 36. When a CDR data packet is received by the MIBB, it is first processed by a processing script within the MIBB for possible field re-arrangement and data re-justification, and then forwarded to the call accounting processor in real time or near real time via the continuous IP connection. A person skilled in the art should recognize, however, that any other type of IP connection that may be conventional in the art may be used instead of a TCP socket connection.

Alternatively, if real time collection of CDR data is not needed, an FTP communications protocol may be implemented where the call accounting processor 36 establishes a connection with the MIBB on a periodic basis, such as, for example, once a day, via a dial-up modem connection or the like. Once a connection is established, the call accounting processor retrieves the stored CDR data from the MIBB 32. Again, instead of an FTP protocol, any other type of data communications protocol may be used to transfer the CDR data.

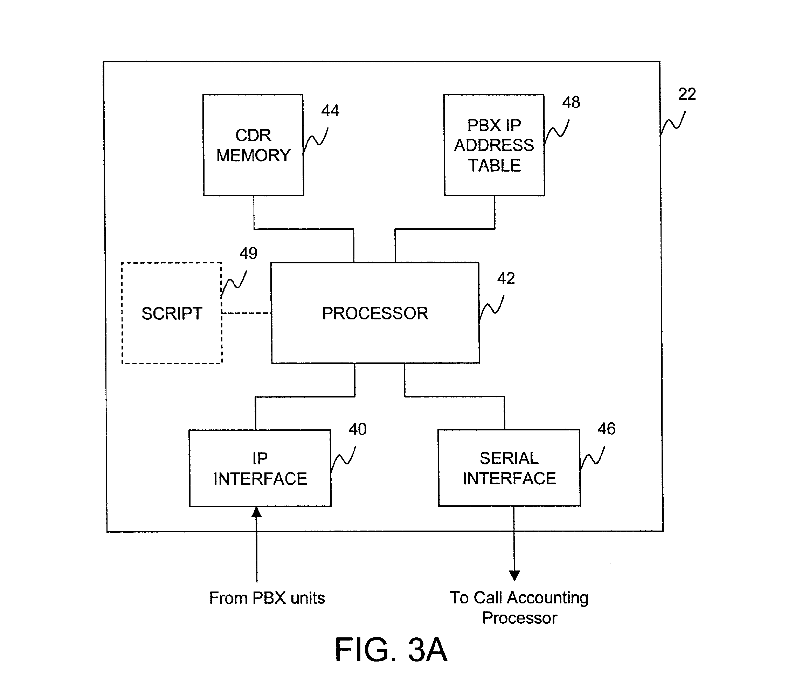

FIG. 3A is a more detailed schematic block diagram of the MIBB 22 of FIG. 2A according to one embodiment of the invention. The MIBB includes an IP interface 40 for receiving CDR data packets from the various PBX units 20a-20c over the data communications network 24. According to one embodiment, the IP interface 40 maintains a continuous TCP/IP socket connection with the various PBX units for receiving the CDR data packets in real or near real time.

The IP interface 40 is coupled to a processor 42 that is configured to process the CDR data packets and generate PBX specific CDR messages for transmitting to the call accounting processor 26. According to one embodiment of the invention, the processor 42 is also configured to generate periodic heartbeat messages directed to the various PBX units 20a-20c and the call accounting processor 26 for determining their functionality.

The processor 42 is coupled to a PBX IP address table 48, CDR memory 44, and serial interface 46. The PBX IP address table 48 and CDR memory 44 may be implemented in a single or separate memory device that is conventional in the art. The PBX IP address table 48 stores the IP address of each PBX unit 20a-20c for which a continuous TCP socket connection is to be maintained for real or near real time transfer of CDR data. The PBX IP address table 48 may further associate each IP address with a particular PBX and/or enterprise site and use the information for generating a PBX-specific header message for serially transmitting the CDR data to the call accounting processor 26. The call accounting processor uses the header message to associate the received CDR data with the identified PBX and/or enterprise site, and render call accounting services for the particular PBX and/or enterprise site.

The processor 52 serially transmits the CDR message containing the CDR data and the proper header information to the call accounting processor 26 via the serial interface 46. Prior to transmitting the CDR message, however, the processor 42 may invoke optional processing for re-formatting the CDR data according to a processing script 49.

According to one embodiment of the invention, the serial interface 46 engages in handshaking operations with the call accounting processor 26 to determine whether the call accounting processor is functional prior to transmitting the CDR message. If the handshaking operation fails, the CDR message is stored in the CDR memory 44. According to one embodiment of the invention, the CDR memory 44 is implemented as a first-in-first-out (FIFO) buffer. When the correct serial handshaking recommences, the CDR memory is emptied serially and the stored CDR messages transmitted to the call accounting processor.

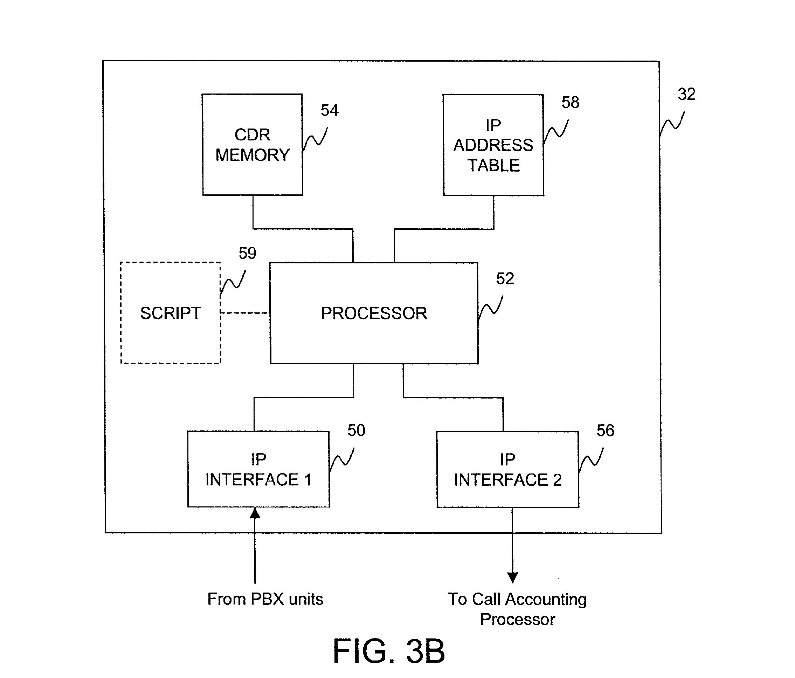

FIG. 3B is a more detailed schematic block diagram of the MIBB 32 of FIG. 2B according to one embodiment of the invention. The MIBB 32 of FIG. 3B is similar to the MIBB 22 of FIG. 3A in that it includes an IP interface 50 for receiving CDR data packets from the various PBX units 30a-30c. The IP interface 50 is coupled to a processor 52 configured to process the CDR data packets and transmit a PBX specific CDR message to the call accounting processor 36. As the processor 42 of FIG. 3A, the processor 52 of FIG. 3B may be configured to generate periodic heartbeat messages directed to the various PBX units 30a-30c and the call accounting processor 36 for determining their functionality.

The processor 52 is coupled to an IP address table 58, a CDR memory 54, a second IP interface 56, and an optional processing script 59. The IP address table 58 stores the IP address of each PBX unit 30a-30c for which a continuous TCP socket connection is to be maintained for real or near real time transfer of CDR data. The IP address table 58 further stores the IP address of the call accounting processor 36 to which CDR data is to be forwarded. The IP address for the call accounting processor 36 may be used to also maintain a continuous TCP socket connection or to establish an FTP connection at predetermined times.

The PBX IP address table 58 may further associate each IP address maintained for each PBX unit 30a-30c with a particular PBX and/or enterprise site. This information may then be transmitted to the call accounting processor as part of the header information of a CDR message for allowing the call accounting processor 36 to associate the CDR data with the correct PBX and/or enterprise site. Alternatively, the association of an IP address with a particular PBX and/or enterprise site may be maintained by the call accounting processor itself. In this scenario, the MIBB 32 need only forward the CDR data packets received from the various PBX units 30a-30c, after optionally invoking the processing script for suitable re-arrangement of the data fields within the message, without including the specific PBX information.

The processor uses the second IP interface 56 to transmit the PBX specific CDR message to the call accounting processor 26 over the IP network 38. A person skilled in the art should recognize that instead of the second IP interface 56, the same IP interface 50 for communicating with the PBX units 30a-30c may be used to communicate with the call accounting processor 36.

According to one embodiment of the invention, the second IP interface 56 engages in handshaking operations with the call accounting processor 36 to determine whether the call accounting processor is functional prior to transmitting the CDR message. If the handshaking operation fails, the CDR message containing the CDR data and any associated header information is stored in the CDR memory 54. When the correct serial handshaking recommences, the CDR memory is emptied for transmitting the stored CDR messages to the call accounting processor.

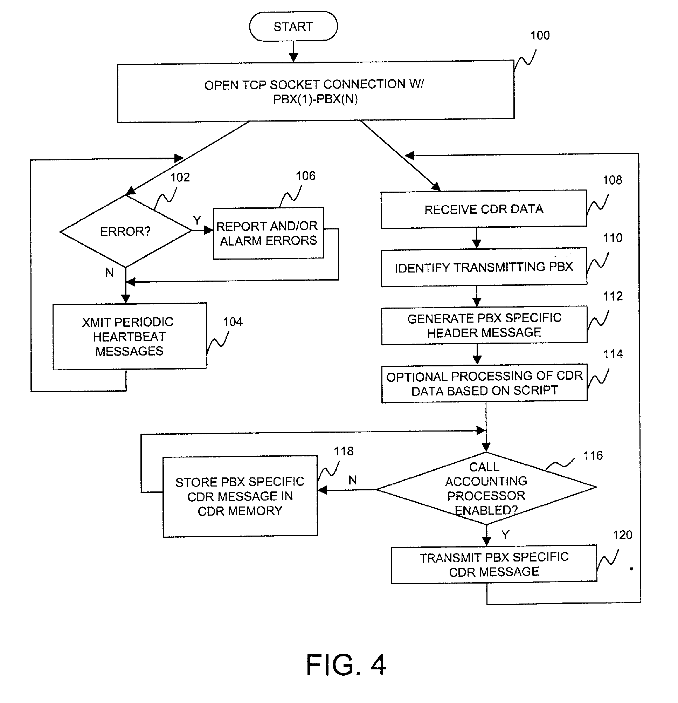

FIG. 4 is a flow diagram of a process carried out by the MIBB 22, 32 in receiving and transmitting CDR data according to one embodiment of the invention. The process starts, and in step 100, the MIBB uses the IP addresses of the PBX units 20a-20c, 30a-30c that are maintained in its IP address table 48, 58 for opening a TCP socket connection with each PBX. In step 102, a determination is made as to whether an error was encountered in opening the TCP connection. If the answer is YES, the error is reported in step 106, and/or an alarm triggered for the PBX for which the TCP socket could not be opened.

Upon opening of the TCP socket connections, the MIBB 22, 32, in step 104, transmits periodic heartbeat messages to the PBX units for determining whether they remain functional. If a PBX does not respond to a heartbeat message, an error is reported in step 106, and/or an alarm triggered for the non-responding PBX.

In step 108, the MIBB receives CDR data from a particular PBX unit via its IP interface 40, 50. In step 110, the MIBB invokes its processor 42, 52 to identify, based on the source IP address of the CDR data packet, the particular PBX and/or enterprise site transmitting the packet. In step 112, the processor generates a PBX specific header message based on the identified PBX and/or enterprise site. In step 114, the processor engages in optional processing of the CDR data based on the processing script 49, 59 maintained by the MIBB. The processed CDR data and header message are then bundled up into a CDR message for transmission to the call accounting processor 26, 36, either in real time or at future time periods.

In this regard, the processor 52 engages in a handshaking procedure with the call accounting processor 26, 36 for determining its functionality. If a correct handshaking is not performed, a determination is made in step 116 that the call accounting processor is disabled, encountering failures, or is unavailable for maintenance. The PBX specific CDR message is then stored in the CDR memory 44, 54 in step 118. Once the call accounting processor becomes enabled, the PBX specific CDR message is transmitted in step 120. The call accounting processor may then perform call accounting functions based on the received CDR message for the particular PBX.

Although this invention has been described in certain specific embodiments, those skilled in the art will have no difficulty devising variations to the described embodiment which in no way depart from the scope and spirit of the present invention. Moreover, to those skilled in the various arts, the invention itself herein will suggest solutions to other tasks and adaptations for other applications. It is the applicants intention to cover by claims all such uses of the invention and those changes and modifications which could be made to the embodiments of the invention herein chosen for the purpose of disclosure without departing from the spirit and scope of the invention. Thus, the present embodiments of the invention should be considered in all respects as illustrative and not restrictive, the scope of the invention to be indicated by the appended claims and their equivalents rather than the foregoing description.

## Claims

1. A system for providing call accounting services, the system comprising:
a plurality of voice switching units, each voice switching unit generating call parameter data associated with calls processed by the voice switching unit;
a central data store receiving the call parameter data from the plurality of voice switching units, the central data store being configured to identify a particular voice switching unit transmitting a particular call parameter data and generate a call parameter message including the call parameter data and information associated with the identified voice switching unit; and
a call accounting processor receiving the call parameter message and processing the call parameter data for the identified voice switching unit.

2. The system of claim 1, wherein the plurality of voice switching units are private branch exchange (PBX) units.

3. The system of claim 1, wherein the central data store includes a network interface for receiving the call parameter data from the plurality of voice switching units over a network connection in real time.

4. The system of claim 1, wherein the central data store includes a serial interface for transmitting the call parameter message to the call accounting processor over a serial connection.

5. The system of claim 1, wherein the central data store includes a network interface for transmitting the call parameter message to the call accounting processor over a network connection.

6. The system of claim 1, wherein the central data store maintains a list of network addresses and information regarding the voice switching unit associated with each network address, the central data store using the network address transmitted with the particular call parameter data for identifying the particular voice switching unit.

7. The system of claim 6, wherein the information associated with the identified voice switching unit is transmitted to the call accounting processor.

8. The system of claim 1, wherein the central data store includes a memory unit for storing the call parameter message upon indication that the call accounting processor is disabled.

9. The system of claim 1, wherein the central data store formats the call parameter data according to a processing script.

10. In a call accounting system including a call accounting processor and a plurality of voice switching units, each voice switching unit generating call parameter data associated with calls processed by the voice switching unit, a central data store and processing device coupled to the plurality of voice switching units and call accounting system comprising:
a network interface receiving a plurality of call parameter data from the plurality of voice switching units;
a memory unit storing a list of network addresses and information regarding the voice switching unit associated with each network address;
a processor coupled to the network interface and the memory unit, the processor configured to identify a particular voice switching unit transmitting a particular call parameter data and generate a call parameter message including the call parameter data and information associated with the identified voice switching unit; and
a second interface transmitting the call parameter message to the call accounting processor, the call accounting processor processing the call accounting data for the identified voice switching unit.

11. The central data store and processing device of claim 9, wherein the plurality of voice switching units are private branch exchange (PBX) units.

12. The central data store and processing device of claim 9, wherein the network interface receives the call parameter data from the plurality of voice switching units in real time.

13. The central data store and processing device of claim 9, wherein the second interface is a serial interface.

14. The central data store and processing device of claim 9, wherein the second interface is a second network interface.

15. The central data store and processing device of claim 9, wherein the processor identifies the particular voice switching unit via a source address transmitted with the particular call parameter data.

16. The central data store and processing device of claim 9, wherein the information associated with the identified voice switching unit is transmitted to the call accounting processor.

17. The central data store and processing device of claim 9 further comprising a second memory storing the call parameter message upon indication that the call accounting processor is disabled.

18. The central data store and processing device of claim 9, wherein the processor formats the call parameter data according to a processing script.

19. A method for providing call accounting services, the method comprising:
receiving a plurality of call parameter data from a plurality of voice switching units;
maintaining a list of network addresses and information regarding the voice switching unit associated with each network address; and
for a particular call parameter data received by the central data store:
identifying a particular voice switching unit transmitting the particular call parameter data;
generating a call parameter message including the call parameter data and information associated with the identified voice switching unit; and
transmitting the call parameter message to a call accounting processor, the call accounting processor processing the call accounting data for the identified voice switching unit.

20. The method of claim 17, wherein the plurality of voice switching units are private branch exchange (PBX) units.

21. The method of claim 17, wherein the central data store receives the call parameter data from the plurality of voice switching units over a network connection in real time.

22. The method of claim 17, wherein the central data store transmits the call parameter message to the call accounting processor over a serial connection.

23. The method of claim 17, wherein the central data store transmits the call parameter message to the call accounting processor over a network connection.

24. The method of claim 17, wherein the central data store identifies the particular voice switching unit via a source address transmitted with the particular call parameter data.

25. The method of claim 17, wherein the information associated with the identified voice switching unit is transmitted to the call accounting processor.

26. The method of claim 17, wherein the central data stores the call parameter message upon indication that the call accounting processor is disabled.

27. The method of claim 17, wherein the central data store formats the call parameter data according to a processing script.
